# EUROPÄISCHE PATENTSCHRIFT

(11) **EP 1 820 871 B1**
(45) Veröffentlichungstag und Bekanntmachung des Hinweises auf die Patenterteilung: **05.12.2012**
(21) Anmeldenummer: 07000735.6
(22) Anmeldetag: 16.01.2007
(51) Int. Cl.: C21D 9/00, C21D 1/10, C22F 1/06, C22F 1/04

(54) **Verfahren und Vorrichtung zum Ausscheidungshärten von hochlegierten Leichtmetallen mittels Induktion**
Process and device for precipitation hardening of highly alloyed light metals by induction
Procédé et dispositif de durcissement par précipitation de métaux légers hautement alliés, par induction

(30) Priorität: 15.02.2006 DE 102006006849
(43) Veröffentlichungstag der Anmeldung: 22.08.2007
(73) Patentinhaber: Bayerische Motoren Werke Aktiengesellschaft, 80809 München (DE)
(72) Erfinder: Hausen, Michael, 81247 München (DE); Mikes, Thomas-Alfred, 85649 Otterloh (DE); Flemming, Torsten, Dr., 85244 Röhrmoos (DE); Riess, Robert, 85244 Röhrmoos (DE)

(56) Entgegenhaltungen:
- EP-A1- 1 020 540
- WO-A-2004/101981
- DE-C1- 19 611 929
- JP-A- 2003 033 859
- US-A- 4 628 167

## Beschreibung

Die Erfindung bezieht sich auf die Verwendung des induktiven Lösungsglühen mit nachfolgendem Abschrecken zum Ausscheidungshärten eines Verbundbauteiles.

So stellt beispielsweise das Kurbelgehäuse eines Verbrennungsmotors ein Verbundbauteil dar, bei dem die Zylinderlaufflächen, die eine Komponente des Verbundbauteils bilden, mit einer Leichtmetalllegierung als zweiter Komponente, z.B. einer Magnesiumlegierung, umgossen sind. Die Laufbuchsen können dabei aus einer ausscheidungsgehärteten, übereutektischen Aluminium-Silizium-Gusslegierung bestehen.

Aus EP-A1-1020540 ist ein Verfahren zum Ausscheidungshärten von Gussteilen aus einer hochlegierten Aluminiumlegierung bekannt, wobei das Härten durch induktives Lösungsglühen mit nachfolgendem Abschrecken erfolgt. Aus JP 2003 033 859 A wird bei einem Aluminium-Verbundbauteil aus einem Motorblock Zylinderlaufbuchse gleichzeitig eine T-5-Behandlung des Zylinderblocks und eine T6-Behandlung der Zylinderbuchse durchgeführt.

Aufgabe der Erfindung ist es, bei einem Verbundbauteil mit zwei Komponenten aus unterschiedlichen Legierungen, also z.B. einem Kurbelgehäuse mit Zylinderlaufbuchsen als der einen Komponente, die Härte der Oberfläche dieser einen Komponente zu erhöhen.

Dies wird erfindungsgemäß mit dem im Anspruch 1 gekennzeichneten Verfahren erreicht. In den Unteransprüchen 2 bis 12 sind vorteilhafte Ausgestaltungen der Erfindung wiedergegeben.

Das erfindungsgemäß ausscheidungsgehärtete hochlegierte Leichtmetall kann eine Aluminium- und/oder Magnesiumlegierung sein, insbesondere eine übereutektische Aluminium-Silizium-Legierung mit einem Siliziumgehalt von mindestens 12 Gew.-% bis beispielsweise 40 Gew.-%. Die Aluminiumlegierung enthält zudem vorzugsweise Kupfer, um intermetallische Phasen, wie Al₂Cu, zu bilden.

Die Erfindung kann insbesondere bei einem Verbundbauteil mit einer ersten Komponente aus dem hochlegierten Leichtmetall als erste Legierung und einer zweiten Komponente aus einer zweiten Legierung eingesetzt werden. Die erste Legierung wird dabei einer Ausscheidungshärtung unterworfen. Die zweite Legierung zeichnet sich demgegenüber dadurch aus, dass sie eine Gefügeumwandlung erleiden würde, wenn sie auf die gleiche Temperatur erwärmt wird, wie die Glühtemperatur zum Ausscheidungshärten der ersten Legierung. Um eine solche Gefügeumwandlung der zweiten Komponente zu verhindern, wird erfindungsgemäß die erste Komponente an der von der zweiten Komponente abgewandten Oberfläche lediglich einer kurzen Lösungsglühbehandlung unterworfen, und zwar einem induktiven Lösungsglühen mit einer Haltezeit von vorzugsweise maximal 10 min, insbesondere 1 min bis 5 min. Anschließend wird die zweite Komponente abgeschreckt und dann das Verbundbauteil ausgelagert.

Durch diese Wärmebehandlung wird die erste Komponente gehärtet, ohne die Gefügestruktur oder andere Eigenschaften der zweiten Komponente negativ zu beeinflussen. Auch wird durch diese Wärmebehandlung ein Verzug des Verbundbauteils verhindert.

Das induktive Lösungsglühen beruht darauf, dass durch eine schnelle Änderung eines Magnetfeldes im Oberflächenbereich des hochlegierten Nichteisenmetalls der ersten Komponente Wirbelströme induziert werden. Diese fließen innerhalb des Materials in einer annähernd kurzgeschlossenen Schleife und können daher sehr hohe Werte erreichen. Der Stromfluss verursacht am Innenwiderstand des Materials einen Spannungsabfall, wodurch Leistung umgesetzt werden kann. Das Material erwärmt sich also ohne direkte Zuführung von Wärmeenergie von selbst.

Zum Abschrecken kann ein herkömmliches Abschreckmittel verwendet werden, z.B. Wasser. Dabei soll die erste Komponente so schnell wie möglich auf Raumtemperatur oder darunter abgekühlt werden.

Das Auslagern des Bauteils kann durch Warmauslagern oder Kaltauslagern erfolgen. Das Warmauslagern wird z.B. bei 100 °C bis 200 °C mindestens 5 h durchgeführt. Das Kaltauslagern erfolgt bei Raumtemperatur für mehrere Tage.

Die erste Komponente kann dabei eine Legierung sein, die durch konventionelle Wärmebehandlung bereits ausscheidungsgehärtet worden ist, bevor sie mit der zweiten Komponente verbunden wurde. D.h., bei einer Aluminiumlegierung als erster Komponente kann die Aluminiumlegierung einer konventionellen Wärmebehandlung durch Lösungsglühen z.B. in einem Kammerofen bei einer Temperatur zwischen 450 °C und 600 °C, insbesondere zwischen 520 °C und 560 °C, für 1 h bis 10 h, Abschrecken z.B. mit Wasser und Warmauslagern z.B. bei 100 °C bis 200 °C mindestens 5 h oder Kaltauslagern bei Raumtemperatur für mehrere Tage unterworfen worden sein. Die so ausscheidungsgehärtete erste Komponente kann dann mit der zweiten Komponente z.B. durch Umgießen verbunden werden.

Für die erste und die zweite Komponente werden vorzugsweise Leichtmetalle verwendet, und zwar vorzugsweise Aluminium- und/oder Magnesiumgusslegierungen. Dabei kann die erste Komponente z.B. aus einer ausscheidungshärtbaren Aluminiumlegierung und die zweite Komponente aus einer anderen Aluminiumlegierung oder einer Magnesiumlegierung bestehen. Vorzugsweise wird für die erste Komponente eine übereutektische Aluminium-Silizium-Gusslegierung eingesetzt, d.h. eine Aluminiumlegierung mit einem Siliziumgehalt von mindestens 12 Gew.-%. Die verwendete Aluminiumlegierung enthält zudem vorzugsweise Kupfer, um intermetallische Phasen, wie Al₂Cu, zu bilden.

Beispielsweise kann das hochlegierte Nichteisenmetall bzw. die erste Legierung aus 12 bis 20 Gew.-% Silizium, 0,1 bis 10 Gew.-% Kupfer und 0,1 bis 5 Gew.-% Magnesium und Aluminium sowie unvermeidbare Verunreinigungen als Rest bestehen. Dabei kann es sich z.B. um Alusil (AlSi17Cu4Mg) handeln.

Die Magnesiumlegierung enthält vorzugsweise 2 bis 15 Gew.-% Aluminium und insgesamt 0,1 bis 5 Gew.-% eines oder mehrerer Alkalimetalle (Kalzium, Strontium, Barium).

Wenn das Verbundbauteil eine Aluminiumgusslegierung als erste Komponente und eine Magnesiumgusslegierung als zweite Komponente aufweist, reicht im Allgemeinen ein induktives Lösungsglühen zwischen 400 °C und 500 °C aus, um die Oberfläche der ersten Komponente hinreichend zu härten. Bei einer kurzen Haltezeit von vorzugsweise weniger als 10 min., insbesondere maximal 5 min, wird damit zusätzlich sichergestellt, dass die Gefügestruktur der zweiten Komponente aus der Magnesiumgusslegierung sich nicht ändert, insbesondere kein Schmelzen der Magnesiumlegierung erfolgt. Vorzugsweise wird die zweite Komponente aus der Magnesiumgusslegierung beim induktiven Lösungsglühen der ersten Komponente auf nicht mehr als 300 °C, insbesondere nicht mehr als 200 °C erwärmt. Zudem hat sich gezeigt, dass eine längere Haltezeit und damit höhere Härte zu einer unerwünschten Sprödigkeit der ersten Komponente führen kann.

Wie erwähnt, kann die erste Komponente z.B. die Zylinderlaufbuchse eines Kurbelgehäuses sein, und die zweite Komponente die Legierung, mit der die Zylinderlaufbuchse umgossen ist. Stattdessen kann die erste Komponente auch durch ein anderes Insert gebildet sein, das von der zweiten Komponente ummantelt ist.

Die Zylinderlaufbuchsen bilden dabei vorzugsweise ein Insert aus einer übereutektischen Aluminium-Silizium-Gusslegierung, wie Alusil, das konventionell ausgehärtet wird. Das Insert wird dann in die Gießform eingelegt und z.B. mit der flüssigen Magnesiumlegierung umgossen. Nach dem Ausscheidungshärten des Inserts als erste Komponente durch induktives Lösungsglühen wird das Innere der Laufbuchsen z.B. durch Honen und dergleichen nachbearbeitet.

Das induktive Lösungsglühen wird mit einer Induktionsanlage durchgeführt, die wie ein sekundärseitig kurzgeschlossener Lufttrafo aufgebaut ist. Das Übersetzungsverhältnis (Primärwicklungen) muss an die Leitfähigkeit der ersten Komponente angepasst werden, da diese immer nur eine Sekundärwindung besitzt. Wie bei einem Tesla-Trafo ist eine ausreichende Energieübertragung nur bei höheren Frequenzen möglich. Dies beruht auf dem Induktionsgesetz, wonach die induzierte Spannung mit der Frequenz linear zunimmt. Als Induktionsanlage hat sich vor allem eine doppelhochfrequenzige Induktionsanlage als geeignet erwiesen, jedoch sind z.B. auch Mittelfrequenz-Anlagen einsetzbar.

Das Bauteil, das dem erfindungsgemäßen Verfahren unterworfen wird, kann aus zwei oder mehreren Komponenten bestehen. Entscheidend ist lediglich, dass wenigstens eine Komponente induktiv lösungsgeglüht wird, während die anderen Komponenten aus einer Legierung bestehen, die durch das Lösungsglühen der einen Komponente keine Gefügeumwandlung erfahren.

Nachstehend ist die Erfindung anhand der beigefügten Zeichnung beispielhaft näher erläutert. Darin zeigen:
- Figur 1: einen Schnitt durch das Kurbelgehäuse eines Verbrennungsmotors; und
- Figur 2: ein Diagramm, das die Härte eines Probekörpers in Abhängigkeit von der Lösungsglühtemperatur und der Haltezeit beim induktiven Lösungsglühen wiedergibt.

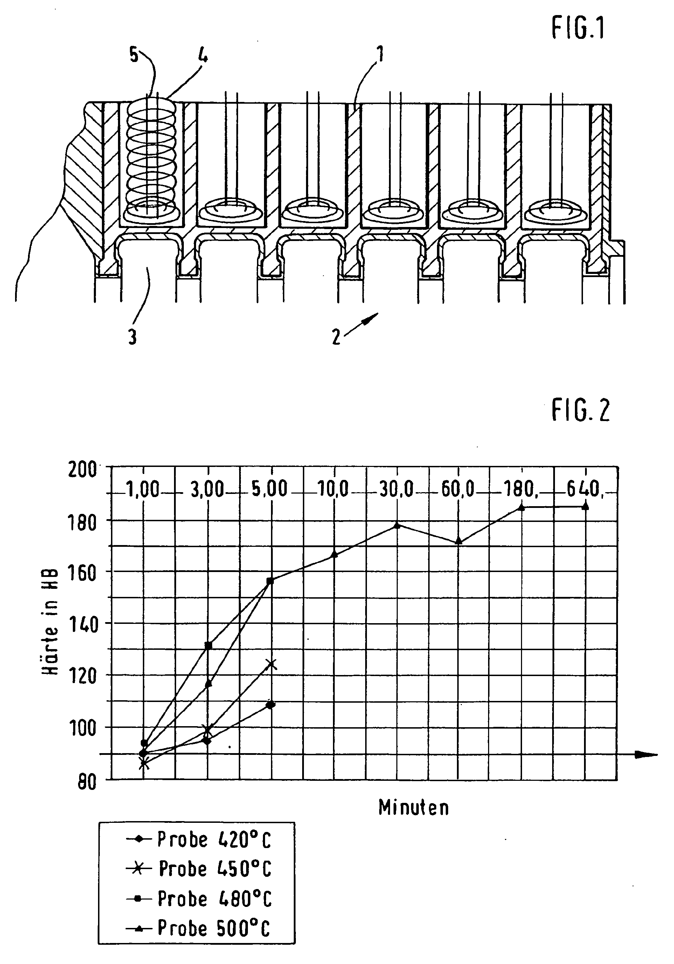

Gemäß Figur 1 ist ein Insert 1 mit den Zylinderlaufbuchsen eines Kurbelgehäuses 2 mit einer Magnesiumlegierung 3 umgossen. Die Buchsen 1 bestehen z.B. aus einer konventionell ausscheidungsgehärteten Alusil-Gusslegierung.

Wie anhand der linken Buchse 1 in Figur 1 gezeigt, wird in jede Buchse 1 eine Induktionsspule 4 eingeführt, die sich über die gesamte Länge der Buchse 1 erstreckt. Weiterhin ist ein Rohr 5 innerhalb der Induktionsspule 4 angeordnet, welches über seine gesamte Länge am Umfang nicht dargestellte Austrittsdüsen zum Austritt des Abschreckmittels aufweist.

Das Diagramm in Figur 2 zeigt die Brinell-Härte (HB) in Abhängigkeit von der Lösungsglühtemperatur und der Haltezeit beim induktiven Lösungsglühen. Dabei wurden Probekörper von etwa 2 cm x 2 cm x 2 cm aus Alusil bei 420 °C, 450 °C, 480 °C und 500 °C zwischen 1 min und 5 min und in einem Fall (Probe 500 °C) bis 640 min induktiv lösungsgeglüht. Zum Lösungsglühen wurde eine Induktionsanlage verwendet.

Die Probekörper wurden mit Wasser auf Raumtemperatur abgeschreckt und bei 170 °C 8 h warm ausgelagert.

Die Brinell-Härte (HB) wurde mit einer Kugel mit einem Durchmesser von 2,5 cm, einer Prüfkraft von 62,5 kp bei einer Einwirkdauer von 30 s bestimmt.

Für die Zylinderlauffläche eines Hubkolbenmotors ist eine Härte von mehr als 100 HB ausreichend. Wesentlich höhere Härten führen nur zu einer unerwünschten Sprödigkeit der Lauffläche. Aus dem Diagramm nach Figur 2 ist zu ersehen, dass bei einer Lösungsglühtemperatur von 420 °C bis 450 °C bei einer Haltezeit von 5 min bereits die gewünschte Härte erzielt wird.

## Patentansprüche

1. Verwendung des induktiven Lösungsglühen mit nachfolgendem Abschrecken zum Ausscheidungshärten einer ersten Komponente eines Verbundbauteils, das zwei Komponenten aus unterschiedlichen Legierungen und ein hohles Insert (1) als erste Komponente und als zweite Komponente eine Ummantelung (3) des Inserts (1) aufweist, wobei die erste Komponente durch ein Leichtmetall gebildet wird und die zweite Komponente aus einer Legierung besteht, die bei der Temperatur zum Ausscheidungsglühen der ersten Komponente einer Gefügeumwandlung ausgesetzt ist.

2. Verwendung nach Anspruch 1, **dadurch gekennzeichnet, dass** das Leichtmetall eine Aluminium- und/oder Magnesiumlegierung ist.

3. Verwendung nach Anspruch 1, **dadurch gekennzeichnet, dass** das Leichtmetall bzw. das Verbundbauteil nach dem induktiven Lösungsglühen und Abschrecken warm ausgelagert wird.

4. Verwendung nach Anspruch 1, **dadurch gekennzeichnet, dass** das Leichtmetall bzw. die erste Komponente aus einer ausscheidungsgehärteten Legierung besteht, bevor sie der weiteren Ausscheidungshärtung durch das induktive Lösungsglühen unterworfen wird.

5. Verwendung nach einem der Ansprüche 3 bis 4, **dadurch gekennzeichnet, dass** die erste Komponente eine ausscheidungshärtbare Aluminiumlegierung und die zweite Komponente eine Aluminiumlegierung oder eine Magnesiumlegierung ist.

6. Verwendung nach Anspruch 1, **dadurch gekennzeichnet, dass** das induktive Lösungsglühen bei einer Temperatur zwischen 400 °C und 500 °C erfolgt.

7. Verwendung nach Anspruch 1, **dadurch gekennzeichnet, dass** das induktive Lösungsglühen mit einer Haltezeit von 0,5 min bis 10 min durchgeführt wird.

8. Verwendung nach Anspruch 1, **dadurch gekennzeichnet, dass** die erste Komponente aus einer Aluminiumlegierung mit einem Siliziumgehalt von mindestens 12 Gew.-% und die zweite Komponente aus einer Magnesiumgusslegierung besteht und die zweite Komponente beim induktiven Lösungsglühen einer Temperatur von maximal 300 °C ausgesetzt wird.

9. Verwendung nach Anspruch 3, **dadurch gekennzeichnet, dass** das Warmauslagern des Verbundbauteils bei 100 °C bis 200 °C mindestens 6 h durchgeführt wird.

10. Verwendung nach Anspruch 9, **dadurch gekennzeichnet, dass** das Verbundbauteil durch ein Kurbelgehäuse (2) eines Verbrennungsmotors gebildet wird, wobei das Insert (1) die Zylinderlaufbuchsen bildet und die Ummantelung (3) durch Umgießen der Inserts (1) mit der Legierung der zweiten Komponente gebildet wird.

11. Verwendung nach Anspruch 10, **dadurch gekennzeichnet, dass** das induktive Lösungsglühen durch in die Zylinderlaufbuchsen einführbare Induktionsspulen (4) erfolgt.

12. Verwendung nach Anspruch 11, **dadurch gekennzeichnet, dass** durch ein in jede Zylinderlaufbuchse einführbares Rohr (5), das über seine gesamte Länge innerhalb der Zylinderlaufbuchse mit Austrittsdüsen für das Abschreckmittel versehen ist, ein Abschreckmittel zugeführt wird.

## Claims

1. Use of the inductive solution treatment and subsequent quenching for precipitation-hardening of a first component of a composite part containing a first component in the form of two different alloys and a hollow insert (1) and a second component forming a casing (3) of the insert (1), wherein the first component is a light metal and the second component is an alloy subjected to structural transformation at the temperature for precipitation-hardening of the first component.

2. Use according to claim 1, **characterised in that** the light metal is an aluminium and/or magnesium alloy.

3. Use according to claim 1, **characterised in that** the light metal or composite part is age-hardened while hot after the inductive solution treatment and quenching.

4. Use according to claim 1, **characterised in that** the light metal or the first component is made of a precipitation-hardened alloy before being subjected to further precipitation hardening after the inductive solution treatment.

5. Use according to claim 3 or claim 4, **characterised in that** the first component is a precipitation-hardenable aluminium alloy and the second component is an aluminium alloy or a magnesium alloy.

6. Use according to claim 1, **characterised in that** the inductive solution treatment is performed at a temperature between 400°C and 500°C.

7. Use according to claim 1, **characterised in that** the inductive solution treatment is performed with a holding time of 0.5 to 10 min.

8. Use according to claim 1, **characterised in that** the first component is an aluminium alloy with a silicon content of at least 12 wt.% and the second component is a magnesium casting alloy and is subjected to a temperature of not more than 300°C during the inductive solution treatment.

9. Use according to claim 3, **characterised in that** age-hardening is performed by heating the composite part to 100 to 200°C for at least 6 hours.

10. Use according to claim 9, **characterised in that** the composite part forms a crankcase (2) of an internal combustion engine, wherein the insert (1) forms the cylinder liners and the casing (3) is formed by casting the second-component alloy round the insert (1).

11. Use according to claim 10, **characterised in that** the inductive solution treatment is via induction coils (4) insertable into the cylinder liners.

12. Use according to claim 11, **characterised in that** a quenching agent is supplied through a tube (5) insertable into each cylinder lining and formed over its entire length inside the cylinder lining with outlet nozzles for the quenching agent.

## Revendications

1. Application du recuit d'homogénéisation, inductif, suivi d'une trempe pour tremper par précipitation un premier composant d'une pièce composite à deux composants en des alliages différents ayant un insert creux (1) comme premier composant et une enveloppe (3) de l'insert (1) comme second composant,
- le premier composant étant un métal léger et le second composant étant un alliage dont le réseau subit une transformation à la température de recuit de précipitation du premier composant.

2. Application selon la revendication 1,
**caractérisée en ce que**
le métal léger est un alliage d'aluminium et/ou de magnésium.

3. Application selon la revendication 1,
**caractérisée en ce que**
le métal léger ou la pièce composite est stocké à chaud après le recuit d'homogénéisation et la trempe.

4. Application selon la revendication 1,
**caractérisée en ce que**
le métal léger ou le premier composant est un alliage avec recuit d'homogénéisation avant d'être soumis à une autre trempe par précipitation, par recuit d'homogénéisation inductif.

5. Application selon l'une des revendications 3 et 4,
**caractérisée en ce que**
le premier composant est un alliage d'aluminium susceptible d'être trempé par précipitation et le second composant est un alliage d'aluminium ou un alliage de magnésium.

6. Application selon la revendication 1,
**caractérisée en ce que**
le recuit d'homogénéisation inductif se fait à une température comprise entre 400°C et 500°C.

7. Application selon la revendication 1,
**caractérisée en ce que**
le recuit d'homogénéisation par précipitation est maintenu pendant un temps de maintien de 0,5 mn à 10 mn.

8. Application selon la revendication 1,
**caractérisée en ce que**
le premier composant est un alliage d'aluminium avec une teneur en silicium d'au moins 12 % et le second composant est un alliage de magnésium, le second composant étant exposé à une température maximale de 300°C pendant le recuit d'homogénéisation.

9. Application selon la revendication 3,
**caractérisée en ce que**
le stockage à chaud de la pièce composite se fait à 100°C-200°C pendant au moins 6 h.

10. Application selon la revendication 9,
**caractérisée en ce que**
la pièce composite est constituée par le carter de vilebrequin (2) d'un moteur à combustion interne,
- l'insert (1) constituant les chemises des cylindres et l'enveloppe (3) étant réalisé en coulant l'alliage du second composant autour des inserts (1).

11. Application selon la revendication 10,
**caractérisée en ce que**
le recuit d'homogénéisation est fait avec des bobines d'induction (4) introduites dans les chemises des cylindres.

12. Application selon la revendication 11,
**caractérisée en ce qu'**
on fournit l'agent de trempe par un tube (5) introduit dans chaque chemise de cylindre et qui est muni de buses sur toute sa longueur dans la chemise du cylindre pour la sortie de l'agent de trempe.
